# EUROPEAN PATENT APPLICATION

(11) **EP 4 063 165 A1**
(43) Date of publication of application: **28.09.2022**
(21) Application number: 21164959.5
(22) Date of filing: 25.03.2021
(51) Int. Cl.: B60K 35/00, B60K 37/06

(54) **A CONTROL SYSTEM AND METHOD FOR MANAGING OF A SAFETY FEATURE OF A VEHICLE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: ZEIDLER, Fredrika, 417 58 GÖTEBORG (SE); PETERSSON, Richard, 431 47 MÖLNDAL (SE); NITZE, Florian, 434 60 KUNGSBACKA (SE)
(74) Representative: Zacco Sweden AB

(57) **Abstract**

The disclosure relates to a control system (100) at a vehicle (1) for managing of a safety feature of the vehicle (1) by a vehicle occupant, the control system (100) comprises an input interface (10,11) configured to receive input by the vehicle occupant in order to control a safety feature of a vehicle (1), a safety switch (5) configured to be activated via input by the vehicle occupant for controlling operation of the input interface (10,11), a processing circuitry (102) operatively connected to the safety switch (5) and the input interface (10,11), the processing circuitry (102) is configured to detect activation of the safety switch (5) via input by the vehicle occupant, enable operation of the input interface (10,11), detect input by the vehicle occupant via the input interface (10,11), and control operation of the safety feature of the vehicle (1). The disclosure further relates to a method for managing of a safety feature of the vehicle (1) by a vehicle occupant and a computer program product (500).

## Description

### Technical field

The present disclosure relates to a control system at a vehicle for managing of a safety feature of the vehicle by a vehicle occupant, a method for managing of a safety feature of the vehicle by a vehicle occupant and a computer program product.

### Background art

Vehicles today are often equipped with a number of safety features controlled by safety control systems. Safety control systems are designed to perform a safety feature or a set of safety features that ensure that risks are kept at an acceptable level. It is desired to minimize failure in operating these safety control systems and there are often different levels of safety that are required by a safety control system in order to meet an intended safety requirement.

Safety feature activation solely by a voice command or by a soft key on a touch screen display is generally not considered safe enough for certain safety features. For example for parking brake activation a hardware switch is often required in order to meet the intended safety requirement for the parking brake activation.

There is however a desire to remove hardware switches for e.g. design and cost reasons, but also for usability reasons to make the operation of the vehicle more intuitive and simple for the vehicle occupant.

### Summary

There is a desire to utilize a fewer number of hardware switches, and in particular to utilize the capacity of a touch screen display as the user interface for a safety control system. By minimizing the number of hardware switches cost can be reduced and the design of the interior of the vehicle can be different. Multiple hardware switches may also cause confusion for the vehicle occupant. There is also a desire to make the operation of the vehicle more intuitive and simple for the vehicle occupant, including operation of safety control systems.

There is also a general demand among vehicle occupants to use touch screen displays and voice control. There is at the same time defined requirements by certain standards how certain safety features are to be controlled by safety control systems in order to meet a certain intended safety requirement.

The inventors have realized how to reduce the number of hardware switches, and how to utilize the capacity of a touch screen display, and also voice control, as the user interface for a safety control system and at the same time meet the required standards for controlling certain safety features.

It is an object of the present disclosure to mitigate, alleviate or eliminate one or more of the above-identified deficiencies and disadvantages in the prior art and solve at least the above mentioned problem.

According to a first aspect there is provided a control system at a vehicle for managing of a safety feature of the vehicle by a vehicle occupant, the control system comprises an input interface configured to receive input by the vehicle occupant in order to control a safety feature of a vehicle, a safety switch configured to be activated via input by the vehicle occupant for controlling operation of the input interface, and a processing circuitry operatively connected to the safety switch and the input interface. The processing circuitry is configured to detect activation of the safety switch via input by the vehicle occupant, enable operation of the input interface, detect input by the vehicle occupant via the input interface, and control operation of the safety feature of the vehicle.

One advantage with this aspect is that the vehicle occupant cannot unintentionally make any input via the input interface. The vehicle occupant first need to intentionally activate the safety switch that enables input via the input interface, and first then can the vehicle occupant select a certain safety feature by input via the input interface which in turn causes a control operation of the safety feature of the vehicle.

According to some embodiments, the operation of the input interface remains enabled in accordance with a determination that the safety switch remains activated.

One advantage with this embodiment is that the vehicle occupant needs to maintain e.g. a finger pressed at the safety switch so that the safety switch remains activated in order to enable operation of the input interface.

According to some embodiments, the safety switch remains activated by a press-and-hold input of the safety switch by the vehicle occupant.

One advantage with this embodiment is that the vehicle occupant, intentionally, actively keeps the safety switch pressed in order to enable operation of the input interface, which in turn enables the vehicle occupant to select a certain safety feature by input via the input interface, which in turn causes a control operation of the safety feature of the vehicle.

According to some embodiments, the processing circuitry is further configured to generate user feedback indicative of enablement of operation of the input interface to the vehicle occupant via a user interface.

One advantage with this embodiment is that the vehicle occupant intuitively gets a feedback that operation of the input interface is enabled so that the vehicle occupant knows that input via the input interface is possible.

According to some embodiments, the processing circuitry is further configured to control operation of the safety feature of the vehicle in accordance with a determination of a deactivation of the safety switch after the detection of the input by the vehicle occupant via the input interface.

One advantage with this embodiment is that the vehicle occupant needs to have the safety switch activated at least at the moment when selecting safety feature by the input via the input interface which minimizes the risk of unintentionally selecting safety feature.

According to some embodiments, the processing circuitry is further configured to control operation of the safety feature of the vehicle in accordance with a determination of a deactivation of the safety switch after the detection of the input by the vehicle occupant via the input interface, and after cease of detection of the input by the vehicle occupant via the input interface.

One advantage with this embodiment is that the vehicle occupant needs to have the safety switch activated when selecting safety feature by the input via the input interface, and also remain the safety switch activated when cease selecting the safety feature by ceasing the input via the input interface. This forces the vehicle occupant to intentionally keep the safety switch activated during the complete session of selecting safety feature.

According to some embodiments, the input interface is any of a touch sensitive display, a hardware key or a software key.

One advantage with this embodiment is that the input interface can be designed using different types of input technologies. In particular, a touch sensitive display and a software key are both flexible and can be used for managing plural safety features.

According to some embodiments, the input interface is a voice controlled input interface configured to detect voice command input by the vehicle occupant via the voice controlled input interface.

One advantage with this embodiment is that the input interface can be controlled by the voice of the vehicle occupant, which minimizes the need to see where the vehicle occupant places a finger for input.

According to some embodiments, the control system further comprises a voice control switch configured to be activated via input by the vehicle occupant for controlling operation of the voice controlled input interface, and the processing circuitry is operatively connected to the safety switch, the voice control switch and the voice controlled input interface, the processing circuitry is further configured to detect activation of the voice control switch via input by the vehicle occupant, control operation of the safety feature of the vehicle in accordance with a determination that the safety switch and the voice control switch remains activated while detecting input by the vehicle occupant via the voice controlled input interface.

One advantage with this embodiment is that the vehicle occupant intentionally needs to activate, e.g. press, both the safety switch and the voice control switch in order to be able to operate of the voice controlled input interface, which minimizes the risk of unintentionally controlling operation of the safety feature via the voice controlled input interface.

According to a second aspect there is provided a method for managing of a safety feature of the vehicle by a vehicle occupant, the method comprising detecting activation of a safety switch via input by a vehicle occupant, enabling operation of an input interface, detecting input by the vehicle occupant via the input interface, and controlling operation of the safety feature of the vehicle.

One advantage with this aspect is that the vehicle occupant cannot unintentionally make any input via the input interface. The vehicle occupant first need to intentionally activate the safety switch that enables input via the input interface, and first then can the vehicle occupant select a certain safety feature by input via the input interface which in turn causes a control operation of the safety feature of the vehicle.

According to some embodiments, the method further comprises generating user feedback indicative of enablement of operation of the input interface to the vehicle occupant via a user interface.

One advantage with this embodiment is that the vehicle occupant intuitively gets a feedback that operation of the input interface is enabled so that the vehicle occupant knows that input via the input interface is possible.

According to some embodiments, the method further comprises controlling operation of the safety feature of the vehicle in accordance with a determination of a deactivation of the safety switch after the detection of the input by the vehicle occupant via the input interface.

One advantage with this embodiment is that the vehicle occupant needs to have the safety switch activated at least at the moment when selecting safety feature by the input via the input interface which minimizes the risk of unintentionally selecting safety feature.

According to some embodiments, the method further comprises controlling operation of the safety feature of the vehicle in accordance with a determination of a deactivation of the safety switch after the detection of the input by the vehicle occupant via the input interface, and after cease of detection of the input by the vehicle occupant via the input interface.

One advantage with this embodiment is that the vehicle occupant needs to have the safety switch activated when selecting safety feature by the input via the input interface, and also remain the safety switch activated when cease selecting the safety feature by ceasing the input via the input interface. This forces the vehicle occupant to intentionally keep the safety switch activated during the complete session of selecting safety feature.

According to some embodiments, the method further comprises detecting activation of a voice control switch via input by the vehicle occupant, controlling operation of the safety feature of the vehicle in accordance with a determination that the safety switch and the voice control switch remains activated while detecting input by the vehicle occupant via the input interface, wherein the input interface is a voice controlled input interface configured to detect voice command input by the vehicle occupant.

One advantage with this embodiment is that the vehicle occupant intentionally needs to activate, e.g. press, both the safety switch and the voice control switch in order to be able to operate of the voice controlled input interface, which minimizes the risk of unintentionally controlling operation of the safety feature via the voice controlled input interface.

According to a third aspect there is provided a computer program product comprising a non-transitory computer readable medium, having thereon a computer program comprising program instructions, the computer program being loadable into a processing circuitry and configured to cause execution of the method of the second aspect when the computer program is run by the at least one processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates an example control system from the inside of a vehicle according to an embodiment of the present disclosure.
Figure 2 illustrates an example control system from the inside of a vehicle according to an embodiment of the present disclosure.
Figure 3a illustrates an example control system with a disabled input interface according to an embodiment of the present disclosure.
Figure 3b illustrates an example control system with an enabled input interface according to an embodiment of the present disclosure.
Figure 3c illustrates an example control system detecting input by a vehicle occupant via the input interface according to an embodiment of the present disclosure.
Figure 3d illustrates an example control system generating user feedback indicative of operation of a safety feature of the vehicle according to an embodiment of the present disclosure.
Figure 4a illustrates an example control system that further comprises a voice control switch according to an embodiment of the present disclosure.
Figure 4b illustrates an example control system when both the safety switch and the voice control switch remains activated according to an embodiment of the present disclosure.
Figure 4c illustrates an example control system generating user feedback indicative of operation of a safety feature of the vehicle according to an embodiment of the present disclosure.
Figure 5 illustrates a flow chart of the method steps according to the second aspect of the disclosure.
Figure 6 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

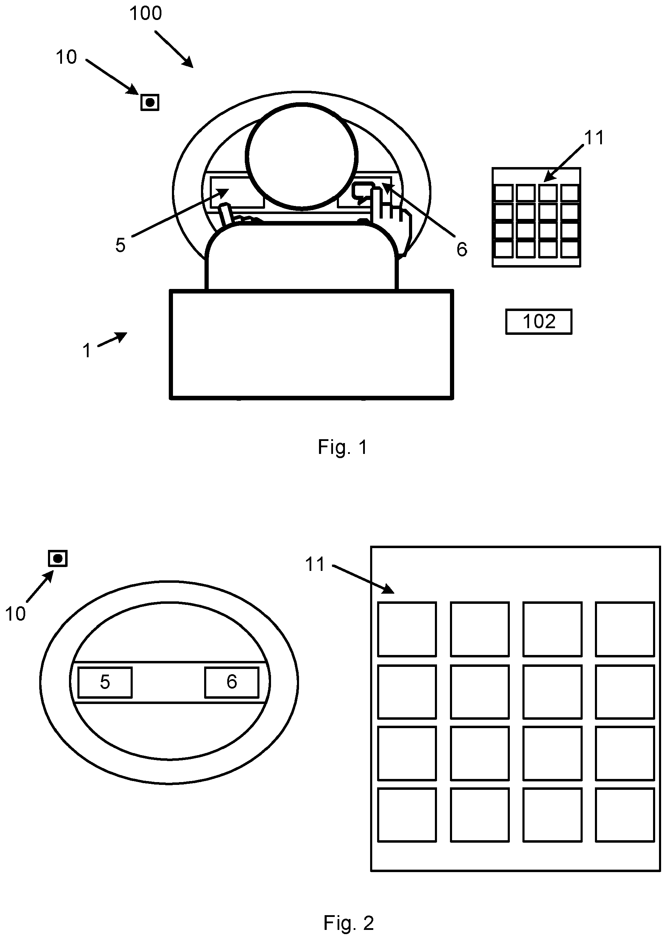

Figure 1 illustrates an example control system 100 from the inside of a vehicle 1 according to an embodiment of the present disclosure.

The first aspect of this disclosure shows a control system 100 at a vehicle 1 for managing of a safety feature of the vehicle 1 by a vehicle occupant.

According to some embodiments a safety feature is a feature that is associated with operating a vehicle function so that risks are kept at an acceptable level. According to some embodiments a safety feature is classified at a certain level to describe stringency of safety requirements to be met. There are different standards that describes safety requirements. One example is ISO 26262, Road Vehicle-Functional Safety, an automotive functional safety standard for passenger vehicle industry. In order to manage a safety feature the input interface for the vehicle occupant, e.g. a switch, needs to be designed in a way so that it shall not be possible to accidentally activate the switch by accident/mistake.

Example safety features are enable/disable parking brake, enable/disable Electronic Stability Control, enable/disable parking assistance, enable/disable parking sensor, manage drive mode, hand over to self-driving system, shift gear etc.

The control system 100 comprises an input interface 10,11 configured to receive input by the vehicle occupant in order to control a safety feature of the vehicle 1.

According to some embodiments the input interface 11 is any of a touch sensitive display, a hardware key or a software key. One advantage with this embodiment is that the input interface can be designed using different types of input technologies. In particular, a touch sensitive display and a software key are both flexible and can be used for managing plural safety features.

In the example control system as illustrated in Figure 1 the input interface 11 is a touch sensitive display, e.g. a so called center stack display. In the example illustration in Figure 1 the input interface 11 comprises plural icons at the touch sensitive display, each icon representing an operation of a safety feature of the vehicle.

According to some embodiments the input interface 11 is a combination of at least a touch sensitive display and/or hardware key and/or a software key. In an example the input interface 11 is a hardware key that is used in combination with a display in order to represent plural different operations of different safety features of the vehicle using one hardware key.

According to some embodiments the input interface 11 is a software key configured to invoke operations of different safety features of the vehicle.

According to some embodiments the input interface 10 is a voice controlled input interface configured to detect voice command input by the vehicle occupant via the voice controlled input interface. One advantage with this embodiment is that the input interface can be controlled by the voice of the vehicle occupant, which minimizes the need to see where the vehicle occupant places a finger for input.

According to some embodiments the input interface is a gesture recognition device configured to detect a gesture as input by the vehicle occupant. According to some embodiments the input interface is a face recognition device configured to detect a face expression as input by the vehicle occupant. According to some embodiments the input interface is an eye movement recognition device configured to detect eye movement as input by the vehicle occupant.

The control system 100 comprises a safety switch 5 configured to be activated via input by the vehicle occupant for controlling operation of the input interface 10,11.

According to some embodiments the safety switch 5 is any of a hardware switch, a software switch or touch sensitive display. According to some embodiments the safety switch 5 is configured to detect activation by sensing a pressure input onto the safety switch 5 caused by input by the vehicle occupant. In an example, as illustrated in Figure1, the safety switch 5 is a hardware switch activated by the vehicle occupant by pressing the safety switch 5 by a finger. According to some embodiments the safety switch 5 is configured to detect activation by sensing a resistance and/or capacitance caused by input by the vehicle occupant. In an example the safety switch 5 is activated by the vehicle occupant by placing the finger onto the safety switch 5.

According to some embodiments the safety switch 5 remains activated in accordance with a determination of an input by the vehicle occupant. According to some embodiments the safety switch 5 is inactivated in accordance with a determination of a cease of input by the vehicle occupant.

Figure 1 illustrates the interior of a vehicle 1 where the vehicle occupant is seated in the driver's seat, behind a steering wheel. In the illustration the safety switch 5 is arranged at the steering wheel. However, according to some embodiments the vehicle 1 does not have a steering wheel. The safety switch 5 can be arranged at any location in the vehicle 1 to be operable by the vehicle occupant.

The control system 100 comprises a processing circuitry 102 operatively connected to the safety switch 5 and the input interface 10,11.

Figure 2 illustrates an example control system 100 from the inside of a vehicle 1 according to an embodiment of the present disclosure.

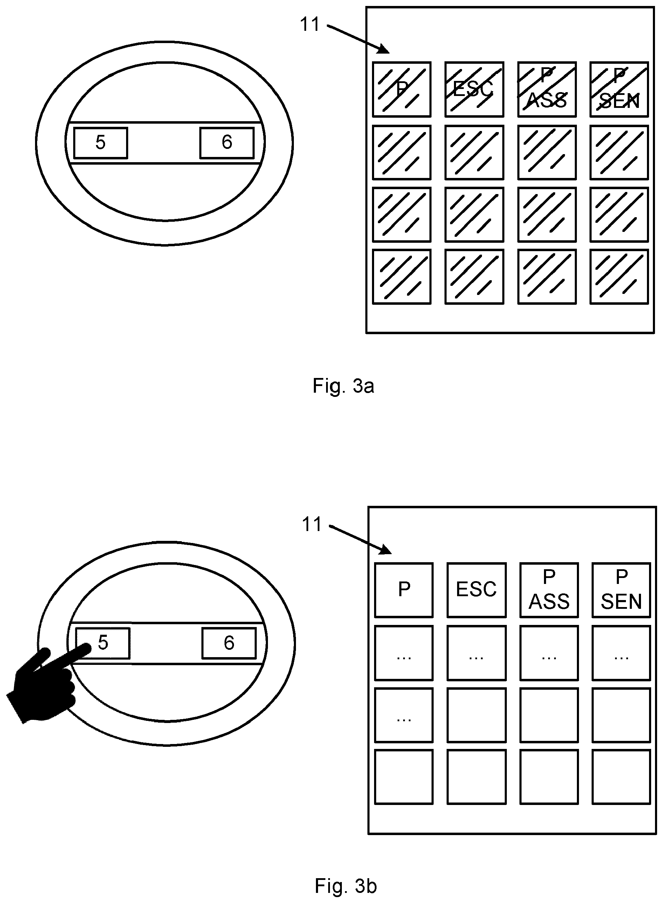

In the illustration in Figure 3a, the input interface 11 is not enabled. In the example illustration in Figure 3a the vehicle occupant can see different safety features, such as "P", enable/disable parking brake, "ESC", enable/disable Electronic Stability Control, "P ASS" enable/disable parking assistance, "P SEN" enable/disable parking sensor, but the safety features are e.g. grayed out or by similar indication at the input interface 11, indicative of the safety feature is not possible to select by the vehicle occupant.

According to some embodiments enable operation of the input interface 11 comprising enabling parts of the input interface 11 associated with safety features. One advantage with this embodiment is that parts of the input interface 11 that is not associated with a safety feature can always be enabled. In an example, turning on the interior lights of the vehicle can always be enabled, while applying the parking brake "P" is a safety feature and require activation of the safety switch 5 via input by the vehicle occupant.

The processing circuitry 102 is configured to detect activation of the safety switch 5 via input by the vehicle occupant and enable operation of the input interface 10,11. In the illustration in Figure 3b, the input interface 11 is enabled. In the example illustration in Figure 3b the vehicle occupant can now see the different safety features, "P", "ESC", "P ASS" and "P SEN", and the safety features are e.g. lit up or by similar indication at the input interface 11, indicative of the safety feature is operable, and can be selected by the vehicle occupant.

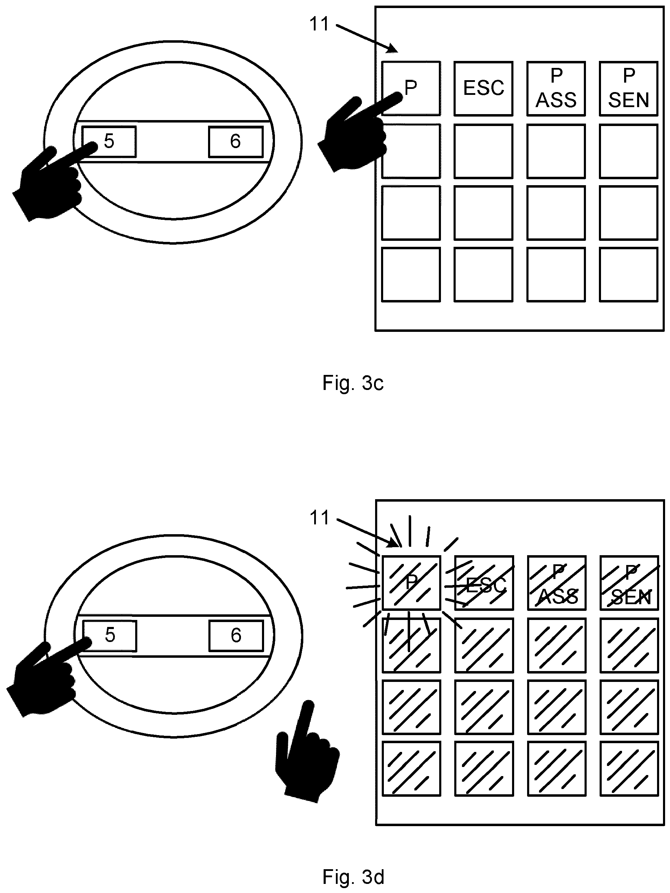

The processing circuitry 102 is configured to detect input by the vehicle occupant via the input interface 10,11, and control operation of the safety feature of the vehicle 1. Figure 3c illustrates an example control system detecting input by a vehicle occupant via the input interface 11 according to an embodiment of the present disclosure. In the example illustration in Figure 3c the vehicle occupant has selected the safety feature "P" to enable the parking brake.

One advantage with this aspect is that the vehicle occupant cannot unintentionally make any input via the input interface 11. The vehicle occupant first need to intentionally activate the safety switch 5 that enables input via the input interface 11, and first then can the vehicle occupant select a certain safety feature by input via the input interface 11 which in turn causes a control operation of the safety feature of the vehicle.

According to some embodiments the processing circuitry 102 is further configured to generate user feedback indicative of controlled operation of the safety feature of the vehicle 1 to the vehicle occupant via a user interface. In the example illustration in Figure 3d the vehicle occupant has selected the safety feature "P" to enable the parking brake, and the safety feature "P" may e.g. then change color from orange to red or similar indication to give the vehicle occupant feedback that the safety feature has been activated.

According to some embodiments the operation of the safety feature comprising activating one or plural safety functions associated with the operation of the safety feature. In an example, a safety feature of releasing the parking brake "P", can comprise the safety functions of releasing the front left and right wheel brakes and releasing the and rear left and right wheel brakes. In a further example, the safety feature of releasing the parking brake "P", can comprise the safety functions of releasing brakes and unlocking the doors.

According to some embodiments the operation of the input interface 10,11 remains enabled in accordance with a determination that the safety switch 5 remains activated.

One advantage with this embodiment is that the vehicle occupant needs to maintain e.g. a finger pressed at the safety switch so that the safety switch remains activated in order to enable operation of the input interface 10,11. The vehicle occupant hence need to intentionally keep the safety switch 5 activated in order to enable operation of the input interface 10, 11, which minimizes the risk of unintentional input of the input interface 10, 11.

According to some embodiments the operation of the input interface 10, 11 is disabled in accordance with a determination that the safety switch 5 is deactivated.

According to some embodiments the safety switch 5 remains activated by a press-and-hold input of the safety switch 5 by the vehicle occupant. According to some embodiments the press-and-hold input of the safety switch 5 require the vehicle occupant apply a certain pressure onto the safety switch 5, and then maintain the certain pressure onto the safety switch 5.

One advantage with this embodiment is that the vehicle occupant, intentionally, actively keeps the safety switch 5 pressed in order to enable operation of the input interface 10,11, which in turn enables the vehicle occupant to select a certain safety feature by input via the input interface 10,11 which in turn causes a control operation of the safety feature of the vehicle.

According to some embodiments the processing circuitry 102 is further configured to generate user feedback indicative of enablement of operation of the input interface 10,11 to the vehicle occupant via a user interface. According to some embodiments the user feedback is at least any of an audio feedback, a visual feedback or a tactile feedback. As mentioned, in one example as illustrated in Figure 3b, the vehicle can see the different safety features, "P", "ESC", "P ASS" and "P SEN", and the safety features are e.g. lit up or by similar indication at the input interface 10,11, indicative of the safety feature is operable, and can be selected by the vehicle occupant. In a further example the user feedback is an audio feedback, e.g. a sound or a voice. In one example the user feedback is a voice "ready for safety feature command" or similar.

One advantage with this embodiment is that the vehicle occupant intuitively gets a feedback that operation of the input interface 11 is enabled so that the vehicle occupant knows that input via the input interface 11 is possible.

According to some embodiments the processing circuitry 102 is further configured to generate user feedback indicative of disablement of operation of the input interface 11 to the vehicle occupant via the user interface in absence of detection of activation of the safety switch 5. As mentioned, in one example as illustrated in Figure 3a, the vehicle occupant can see the different safety features, "P", "ESC", "P ASS" and "P SEN" but the safety features are e.g. grayed out or by similar indication at the input interface 11, indicative of the safety feature is not operable.

One advantage with this embodiment is that the vehicle occupant intuitively gets a feedback that operation of the input interface 11 is disabled so that the vehicle occupant knows that input via the input interface 11 is only possible if the safety switch 5 is activated, which reduces the risk of unintentionally input of the input interface 11.

According to some embodiments the processing circuitry 102 is further configured to control operation of the safety feature of the vehicle 1 in accordance with a determination of a deactivation of the safety switch 5 after the detection of the input by the vehicle occupant via the input interface 10,11.

One advantage with this embodiment is that the vehicle occupant needs to have the safety switch 5 activated at least at the moment when selecting safety feature by the input via the input interface 10,11 which minimizes the risk of unintentionally selecting safety feature.

According to some embodiments the processing circuitry 102 is further configured to control operation of the safety feature of the vehicle 1 in accordance with a determination of a deactivation of the safety switch 5 after the detection of the input by the vehicle occupant via the input interface 10,11, and after cease of detection of the input by the vehicle occupant via the input interface 10,11.

One advantage with this embodiment is that the vehicle occupant needs to have the safety switch activated when selecting safety feature by the input via the input interface 10,11, and also remain the safety switch activated when cease selecting the safety feature by ceasing the input via the input interface 10,11. This forces the vehicle occupant to intentionally keep the safety switch activated during the complete session of selecting safety feature.

According to some embodiments the processing circuitry 102 is further configured to control operation of one safety feature at the time in accordance with a determination of a deactivation of the safety switch 5 after the detection of the input by the vehicle occupant via the input interface 10,11, and after cease of detection of the input by the vehicle occupant via the input interface 10,11. This means that in order to control operation of a further safety feature, the safety switch 5 needs to be activated again. This reduces the risk of activating multiple different safety features e.g. by selecting multiple safety features available via the input interface 11, that is e.g. a touch sensitive display, since the safety switch 5 needs to be deactivated and activated again in order to select a further safety feature.

According to some embodiments the input interface 10 is a voice controlled input interface configured to detect voice command input by the vehicle occupant via the voice controlled input interface 10.

According to some embodiments the voice controlled input interface 10 is configured to obtain voice command input after detection of a predefined word associated with operation of a safety feature. In an example the predefined word is "safety". In an example the word "safety" followed by the word "release parking brake" will control operation of releasing the parking brake, as an example of a safety feature of the vehicle 1. In a further example the word "safety" followed by the word "change drive mode to sport" will control operation of driving mode settings, as an example of a safety feature of the vehicle 1.

One advantage with this feature is that by using a specific word associated with operation of a safety feature, it becomes even more difficult to unintentionally select and control operation of the safety feature of the vehicle.

According to some embodiments the control system 100 further comprises a voice control switch 6 configured to be activated via input by the vehicle occupant for controlling operation of the voice controlled input interface 10.

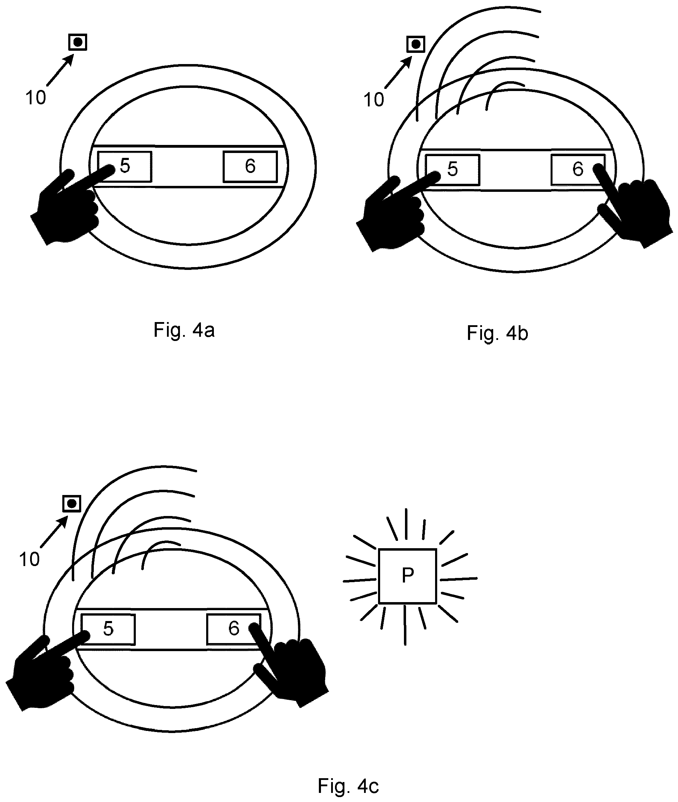

Figure 4a illustrates an example control system 100 that further comprises a voice control switch 6 according to an embodiment of the present disclosure. Figure 4 further illustrates an example voice controlled input interface 10, e.g. comprising a microphone, that is arranged in the vicinity of the safety switch 5 and the control switch 6. In the example illustration in Figure 4a the safety switch 5 is activated via input by the vehicle occupant.

The processing circuitry 102 is operatively connected to the safety switch 5, the voice control switch 6 and the voice controlled input interface 10. The processing circuitry 102 is further configured to detect activation of the voice control switch 6 via input by the vehicle occupant. Figure 4b illustrates an example control system 100 when both the safety switch 5 and the voice control switch 6 remains activated according to an embodiment of the present disclosure.

The processing circuitry 102 is further configured to control operation of the safety feature of the vehicle 1 in accordance with a determination that the safety switch 5 and the voice control switch 6 remains activated while detecting input by the vehicle occupant via the voice controlled input interface 10. Figure 4b illustrates speech input by the vehicle occupant via the voice controlled input interface 10. According to some embodiments the voice controlled input interface 10 is configured to obtain voice command input.

According to some embodiments the voice controlled input interface 10 is configured to obtain voice command input in accordance with a determination that the safety switch 5 and the voice control switch 6 remains activated, and control operation of the safety feature of the vehicle 1 after detection of a predefined word associated with operation of a safety feature. One advantage with this feature is that by using a specific word associated with operation of a safety feature, it becomes even more difficult to unintentionally select and control operation of the safety feature of the vehicle 1 since both the safety switch 5 and the voice control switch 6 need to remain activated.

According to some embodiments when using voice controlled input interface 10, the processing circuitry 102 is further configured to generate user feedback indicative of controlled operation of the safety feature of the vehicle 1 to the vehicle occupant via a user interface.

According to some embodiments the user feedback is at least any of an audio feedback, a visual feedback or a tactile feedback. In an example the user feedback is a spoken voice indicative of controlled operation of the safety feature of the vehicle 1 to the vehicle occupant via a user interface in form of a loudspeaker. In an example the spoken voice is "safety feature parking brake activated". In an example the user feedback is a visual feedback, e.g. in form of an icon, indicative of controlled operation of the safety feature of the vehicle 1 to the vehicle occupant via a user interface in form of a display. Figure 4c illustrates an example of an icon illustrating that the safety feature "P", parking brake, has been activated.

According to some embodiments the input interface 11 comprises a first input interface, that is any of a touch sensitive display, a hardware key or a software key, and a second input interface that is a voice controlled input interface 10, and the operation of the safety feature of the vehicle 1 is controlled in accordance with a determination that the safety switch 5 and the first input interface remains activated while detecting input by the vehicle occupant via the second input interface that is a voice controlled input interface.

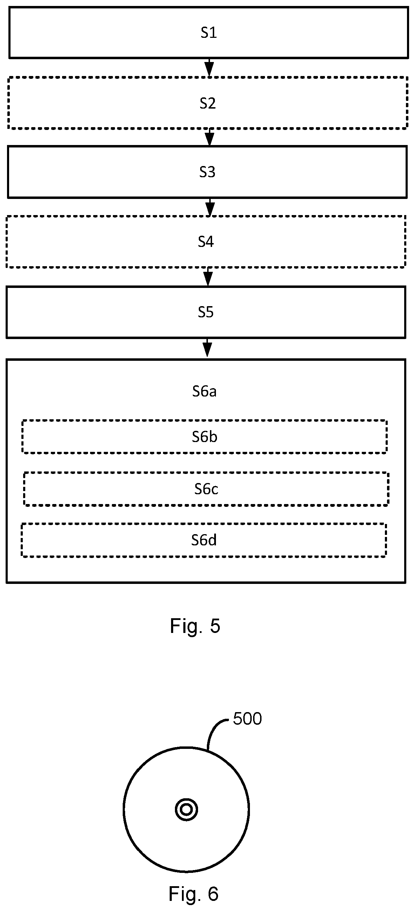

The second aspect of this disclosure shows a method for managing of a safety feature of the vehicle 1 by a vehicle occupant. Figure 5 illustrates a flow chart of the method steps according to the second aspect of the disclosure.

The method comprising the step of S1 detecting activation of a safety switch 5 via input by a vehicle occupant, the step of S3 enabling operation of an input interface 10,11, the step of S5 detecting input by the vehicle occupant via the input interface 10,11, and the step of S6a controlling operation of the safety feature of the vehicle 1.

One advantage with this aspect is that the vehicle occupant cannot unintentionally make any input via the input interface 10,11. The vehicle occupant first need to intentionally activate the safety switch that enables input via the input interface, and first then can the vehicle occupant select a certain safety feature by input via the input interface 10,11 which in turn causes a control operation of the safety feature of the vehicle 1.

According to some embodiments the method further comprises the step of S4 generating user feedback indicative of enablement of operation of the input interface 10,11 to the vehicle occupant via a user interface.

One advantage with this embodiment is that the vehicle occupant intuitively gets a feedback that operation of the input interface 10, 11 is enabled so that the vehicle occupant knows that input via the input interface is possible.

According to some embodiments the method further comprises the step of S6b controlling operation of the safety feature of the vehicle 1 in accordance with a determination of a deactivation of the safety switch 5 after the detection of the input by the vehicle occupant via the input interface 10,11.

One advantage with this embodiment is that the vehicle occupant needs to have the safety switch activated at least at the moment when selecting safety feature by the input via the input interface 10, 11 which minimizes the risk of unintentionally selecting safety feature.

According to some embodiments the method further comprises the step of S6c controlling operation of the safety feature of the vehicle 1 in accordance with a determination of a deactivation of the safety switch 5 after the detection of the input by the vehicle occupant via the input interface 10,11, and after cease of detection of the input by the vehicle occupant via the input interface 10,11.

One advantage with this embodiment is that the vehicle occupant needs to have the safety switch activated when selecting safety feature by the input via the input interface 10,11, and also remain the safety switch activated when cease selecting the safety feature by ceasing the input via the input interface 10,11. This forces the vehicle occupant to intentionally keep the safety switch activated during the complete session of selecting safety feature.

According to some embodiments the method further comprises the step of S2 detecting activation of a voice control switch 6 via input by the vehicle occupant, the step of S6d controlling operation of the safety feature of the vehicle 1 in accordance with a determination that the safety switch 5 and the voice control switch 6 remains activated while detecting input by the vehicle occupant via the input interface 10,11, wherein the input interface 10,11 is a voice controlled input interface 10 configured to detect voice command input by the vehicle occupant.

One advantage with this embodiment is that the vehicle occupant intentionally needs to activate, e.g. press, both the safety switch and the voice control switch in order to be able to operate of the voice controlled input interface 10, which minimizes the risk of unintentionally controlling operation of the safety feature via the voice controlled input interface 10.

The third aspect of this disclosure shows a computer program product 500 comprising a non-transitory computer readable medium, having thereon a computer program comprising program instructions, the computer program being loadable into a processing circuitry 102 and configured to cause execution of the method of the second aspect when the computer program is run by the at least one processing circuitry 102.

The disclosure as claimed in the first, second and third aspects enables that multiple requirements of standards that describes safety requirements, can be complied with. One example standard, is the ISO 26262, Road Vehicle-Functional Safety, an automotive functional safety standard for passenger vehicle industry. This introduces the possibility to minimize the number of required hardware switches and introduces the possibility to use touch sensitive displays for safety features. In particular requirements of high safety classed automotive safety integrity levels are possible to meet according to the first, second and third aspects of the disclosure.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A control system (100) at a vehicle (1) for managing of a safety feature of the vehicle (1) by a vehicle occupant, the control system (100) comprises:
an input interface (10,11) configured to receive input by the vehicle occupant in order to control a safety feature of a vehicle (1);
a safety switch (5) configured to be activated via input by the vehicle occupant for controlling operation of the input interface (10,11);
a processing circuitry (102) operatively connected to the safety switch (5) and the input interface (10,11), the processing circuitry (102) is configured to:
- detect activation of the safety switch (5) via input by the vehicle occupant;
- enable operation of the input interface (10,11);
- detect input by the vehicle occupant via the input interface (10,11); and
- control operation of the safety feature of the vehicle (1).

2. The control system (100) according to claim 1, wherein the operation of the input interface (10,11) remains enabled in accordance with a determination that the safety switch (5) remains activated.

3. The control system (100) according to claim 2, wherein the safety switch (5) remains activated by a press-and-hold input of the safety switch (5) by the vehicle occupant.

4. The control system (100) according to any of the preceding claims, wherein the processing circuitry (102) is further configured to:
- generate user feedback indicative of enablement of operation of the input interface (10,11) to the vehicle occupant via a user interface.

5. The control system (100) according to any of the preceding claims, wherein the processing circuitry (102) is further configured to:
- control operation of the safety feature of the vehicle (1) in accordance with a determination of a deactivation of the safety switch (5) after the detection of the input by the vehicle occupant via the input interface (10,11).

6. The control system (100) according to any of the preceding claims, wherein the processing circuitry (102) is further configured to:
- control operation of the safety feature of the vehicle (1) in accordance with a determination of a deactivation of the safety switch (5) after the detection of the input by the vehicle occupant via the input interface (10,11), and after cease of detection of the input by the vehicle occupant via the input interface (10,11).

7. The control system (100) according to any of the preceding claims, wherein the input interface (10,11) is any of a touch sensitive display, a hardware key or a software key.

8. The control system (100) according to any of the preceding claims, wherein the input interface (10,11) is a voice controlled input interface configured to detect voice command input by the vehicle occupant via the voice controlled input interface.

9. The control system (100) according to claim 8, wherein the control system (100) further comprises:
a voice control switch (6) configured to be activated via input by the vehicle occupant for controlling operation of the voice controlled input interface; and the processing circuitry (102) is operatively connected to the safety switch (5), the voice control switch (6) and the voice controlled input interface, the processing circuitry (102) is further configured to:
- detect activation of the voice control switch (6) via input by the vehicle occupant; and
- control operation of the safety feature of the vehicle (1) in accordance with a determination that the safety switch (5) and the voice control switch (6) remains activated while detecting input by the vehicle occupant via the voice controlled input interface.

10. A method for managing of a safety feature of the vehicle (1) by a vehicle occupant, the method comprising:
- (S1) detecting activation of a safety switch (5) via input by a vehicle occupant;
- (S3) enabling operation of an input interface (10,11);
- (S5) detecting input by the vehicle occupant via the input interface (10,11); and
- (S6a) controlling operation of the safety feature of the vehicle (1).

11. The method according to claim 10, the method further comprising:
- (S4) generating user feedback indicative of enablement of operation of the input interface (10,11) to the vehicle occupant via a user interface.

12. The method according to any of the claims 10-11, the method further comprising:
- (S6b) controlling operation of the safety feature of the vehicle (1) in accordance with a determination of a deactivation of the safety switch (5) after the detection of the input by the vehicle occupant via the input interface (10,11).

13. The method according to any of the claims 10-12, the method further comprising:
- (S6c) controlling operation of the safety feature of the vehicle (1) in accordance with a determination of a deactivation of the safety switch (5) after the detection of the input by the vehicle occupant via the input interface (10,11), and after cease of detection of the input by the vehicle occupant via the input interface (10,11).

14. The method according to any of the claims 10-13, the method further comprising:
- (S2) detecting activation of a voice control switch (6) via input by the vehicle occupant; and
- (S6d) controlling operation of the safety feature of the vehicle (1) in accordance with a determination that the safety switch (5) and the voice control switch (6) remains activated while detecting input by the vehicle occupant via the input interface (10,11), wherein the input interface (10,11) is a voice controlled input interface configured to detect voice command input by the vehicle occupant.

15. A computer program product (500) comprising a non-transitory computer readable medium, having thereon a computer program comprising program instructions, the computer program being loadable into a processing circuitry (102) and configured to cause execution of the method according to any of claims 10 through 14 when the computer program is run by the at least one processing circuitry (102).
